# EUROPÄISCHE PATENTSCHRIFT

(11) **EP 2 036 749 B1**
(45) Veröffentlichungstag und Bekanntmachung des Hinweises auf die Patenterteilung: **21.08.2013**
(21) Anmeldenummer: 08017374.3
(22) Anmeldetag: 09.11.2001
(51) Int. Cl.: B60H 1/22, B60H 1/00

(54) **Klima- und Belüftungsanlage für ein Kraftfahrzeug**
Air conditioning and ventilation system for a motor vehicle
Installation de climatisation et d'aération pour un véhicule automobile

(30) Priorität: 10.11.2000 DE 10055670; 10.11.2000 DE 10055672; 10.11.2000 DE 10055669
(43) Veröffentlichungstag der Anmeldung: 18.03.2009
(62) Teilanmeldung aus: 01126776.2
(73) Patentinhaber: Volkswagen Aktiengesellschaft, 38440 Wolfsburg (DE)
(72) Erfinder: Schulze, Werner, Dr., 38531 Rötgesbüttel (DE); Meyer, Manfred, 38474 Tülau (DE); Brück, Stefan, 38442 Wolfsburg (DE)
(74) Vertreter: Pohlmann, Bernd Michael

(56) Entgegenhaltungen:
- DE-A- 3 820 431
- DE-A1- 19 646 123
- DE-A1- 19 811 548
- DE-C- 19 708 383
- FR-A- 2 659 908
- US-A- 4 665 971

## Beschreibung

Die Erfindung bezieht sich auf eine Klima- und Belüftungsanlage für ein Kraftfahrzeug, insbesondere für einen Personenkraftwagen, mit einem im Bereich der Instrumententafel angeordneten Gehäuse, das umfaßt
- ein Gebläse zum Ansaugen von Frisch- und / oder Umluft,
- ein Klimagerät zum Erwärmen oder Kühlen mindestens eines Teils des angesaugten Luftstroms,
- einen im Anschluß an das Klimagerät geteilten Luftverteilungsraurn, von dem aus mindestens ein Front-Luftkanal und mindestens ein Fond-Luftkanal abgeht, und
- gegebenenfalls Luftsteuerelemente zur Steuerung der Luftmenge in diesen Luftkanälen.

Sicherheit und Komfort stehen an der Spitze der Anforderungen, die ein Käufer an ein Kraftfahrzeug stellt. Die Klimatisierung des Personenkraftwagens, gilt als ein ausgesprochen typisches Merkmal für Komfort. Das haben auch die Autohersteller erkannt und bieten daher im Rahmen von werbewirksamen Verkaufsaktionen teils schon wahlweise entweder ein Schiebedach oder eine Klimaanlage zum selben Preis. Und so steigt der Anteil der neu zugelassenen Fahrzeuge mit Klimaanlage ständig an, selbst in Mitteleuropa mit meist gemäßigtem Klima. Besonders in der gehobenen Klasse gilt heute die Klimaanlage nahezu als ein Muß bei der Ausstattung. Das muß der Eigentümer spätestens beim Wiederverkauf seines gebrauchten Fahrzeugs feststellen.

Folglich sind Klimaanlagen der eingangs Genannten Art schon in vielen Personenkraftwagen der gehobenen, teils schon der mittleren Klasse verwirklicht. Da die Klimaanlage in der Regel vorne, im Bereich der Armaturentafel, angeordnet ist, ergeben sich schon bei vier- und mehrsitzigen Wagen Probleme für die Passagiere im Fond.

Die klimatisierte, also erwärmte oder Gekühlte, Luft wird üblicherweise durch einen Fondkanal nach hinten geführt und kann dort an verschiedenen Stellen austreten. Zum Beispiel sind beim Saab 900 die hintere Fußraumbelüftung und die B-Säulenbelüftung an den Fondkanal angeschlossen. Da dort aber eine Absperrmöglichkeit des hinteren Fußraumes fehlt, kann die B-Säulenbelüftung nur im Heizfalle und nicht im Kühlfalle eingesetzt werden, will man eine unangenehme Kühlung der hinteren Passagiere vom Fußraum her vermeiden,

Die klimatisierte Luft wird üblicherweise durch einen Fondkanal nach hinten geführt und kann dort an verschiedenen Stellen austreten zum Beispiel im Fußraum, an der Mittelkonsole durch einen sogenannten Mannanströmer und, auch in Kopfhöhe, aus der B-Säule. Zwar kann in der Regel die austretende Luftmenge gesteuert werden, eine individuelle Veränderung der Lufttemperatur ist jedoch für die Passagiere im Fond nicht vorgesehen.

Andere B-Säulenbelüftungen werden über zusätzliche Kanäle von vorn beaufschlagt, zum Beispiel beim Audi AB oder bei der Deutschen Patentanmeldung DE 1 96 46123. Dies führt jedoch zu folgendem: Zum ersten verkleinern die zusätzlichen Luftkanäle den nutzbaren Innenraum. Zum zweiten sind im bloßen Kühlfalle die zum Heizen benötigten Fondkanäle ohne Funktion.

Bei klimatisierten Personenwagen der Luxusklasse ist es bekannt, für die Passagiere im Fond ein zusätzliches Klimagerät mit eigenem Verdampfer anzuordnen. Diese Anordnung ermöglicht zwar eine individuelle Steuerung der Temperatur im Fond, führt jedoch durch den enormen Bauaufwand zu einem erhöhten Raumbedarf und zu einer Verteuerung des Fahrzeugs. Daher sind derartige Anordnungen nur als Sonderausstattung und bei großvolumigen und teuren Kraftfahrzeugen zu finden.

Dabei ist es auch bekannt, im Frontbereich der unbehandelten Außenluft Kaltluft, also klimatisierte Luft, beizumischen Diese Zumischung dient insbesondere der Temperaturschichtung und Feinabstimmung im Bereich der Instrumententafel und damit der Komforterhöhung für die Frontinsassen.

Der Erfindung liegt die Aufgabe zugrunde, den Komfort bezüglich der Klimatisierung für die Passagiere im Fond mit geringem Aufwand wesentlich zu verbessern.

Die Erfindung löst diese Aufgabe gemäß den unabhängigen Ansprüchen.

Die Erfindung ermöglicht eine weitgehend individuelle Klimatisierung des Fonds mit nur einem einzigen, im Frontbereich angeordneten Klimagerät:

Im Heizfalle wird die erwärmte Luft optimal genutzt: Zum einen wird sie auf die B-Säule zur Entfeuchtung der hinteren Seitenscheiben gerichtet, zum anderen dient sie zur angenehmen Erwärmung des hinteren Fußraumes. Wärmeverluste, die durch die langen Transportwege der Warmluft von vorne bis in den Fond besonders bei sehr niedrigen Außentemperaturen auftreten, werden durch die Zusatzheizung ausgeglichen. So kommen auch die Passagiere im Fond in den Genuß einer angenehmen Temperierung selbst bei tiefsten Außentemperaturen.

Im Kühlfalle kann die Luft im Fond-Luftkanal nach Wunsch mehr oder weniger aufgeheizt und nach Belieben im Fond verteilt werden: Teils oder ganz im Fußraum oder ganz oder teils im B-Säulenbereich. Die dann gewünschte Belüftung des Kopfraumes ist sichergestellt. Dabei kann die Luftmenge am B-Säulen-Auslaß in bekannter Weise gesteuert werden. Es erübrigt sich sowohl eine zusätzliche, teure, wartungsbedürftige und raumraubende Klimaanlage, als auch nur ein einziger, zusätzlicher Fondkanal, der letztlich den nutzbaren Innenraum ebenso verringern würde.

Weitere Ausgestaltungen der Erfindung sind in den Unteransprüchen aufgezeigt.

Eine höchst individuelle Klimatisierung wird erzielt, wenn die Luftsteuerelemente in Stufen oder sogar stufenlos steuerbar sind.

Die Erfindung ermöglicht eine individuelle Klimatisierung des Fonds, und zwar unabhängig von der Steuerung des Frontbereiches und mit nur einem einzigen Klimagerät. Luftmenge, Lufttemperatur und Luftschichtung können von den Passagieren des Fonds - im Rahmen der Daten der Klimaanlage - frei gewählt werden.

Der weiteren Erhöhung des Komforts dient es, daβ der Fond-Luftkanal einen Abzweigkanal aufweist, in den der weitere Luftkanal mündet, und daβ ein Luftsteuerelement, wie zum Beispiel eine Klappe, angeordnet ist, mittels dem wahlweise der Abzweigkanal oder der Hauptkanal des Fond-Luftkanals teilweise oder ganz absperrbar ist.

In komfortabler Weise dient der Fond-Luftkanal zur Belüftung aus der hinteren Mittelkonsole, des hinteren Fußraumes und der B-Säule des Fahrzeugs, aus der die Luft eventuell auch in Kopfhöhe austreten kann.

Der Abzweigkanal dient zur Belüftung der B-Säule.

Der weitere Luftkanal kann von der instrumententafel her zugeführt werden, am besten in Form eines flachen Rohres, das im Boden angeordnet und im geometrischen Querschnitt dem zur Verfügung stehenden Innenraum angepaßt ist.

Gemäβ der Erfindung wird der Komfort bezüglich der Klimatisierung für die Passagiere im Fond mit geringem Aufwand nochmals wesentlich verbessert. Dazu wird durch eine Luftsteuervorrichtung eine variable Aufteilung des Luftstromes im Fond-Luftkanal auf den Fußraumauslaß einerseits und auf den B-Säulen-Auslaß andererseits ermöglicht.

Die Erfindung ermöglicht eine weitgehend individuelle Klimatisierung des Fonds, in dem im Heizfalle wird die erwärmte Luft optimal genutzt wird. Dazu wird sie zum einen auf die B-Säule zur Entfeuchtung der hinteren Seitenscheiben gerichtet, zum anderen dient sie zur angenehmen Erwärmung des hinteren Fußraumes. Im Kühlfalle kann durch die Erfindung der Fußraumauslaß ganz geschlossen und die gekühlte Luft in vollem Umfang zum B-Säulen-Auslaß geleitet werden: Die dann gewünschte Belüftung des Kopfraumes ist sichergestellt. Dabei kann die Luftmenge am B-Säulen-Auslaß in bekannter Weise gesteuert werden.

Der Belüftungskomfort wird weiter erhöht, wenn die variable Aufteilung des Luftstromes im Fond-Luftkanal mindestens nahezu von 0 bis 100 % reicht. Meist wird der Luftstrom im Kühlfalle ganz, also zu 100%, auf die B-Säule geleitet werden. Wenn es jedoch gewünscht wird, einen geringen Teil, zum Beispiel 5%, auch des gekühlten Luftstromes für die Dauerbelüftung des Fußraumes zur Verfügung zu halten, dann soll dies auch möglich sein.

Die Luftsteuervorrichtung umfaßt mindestens eine den Querschnitt vermindernde bzw. vergrößernde Vorrichtung. Solche Vorrichtungen können mechanische Klappen, Schieber und dergleichen sein. Eine bevorzugte Vorrichtung ist als einflügelige Drehklappe ausgebildet.

Eine derartige Luftsteuervorrichtung, wie Klappe und dergleichen, kann direkt von Hand oder aus der Ferne, vom Fond aus, elektromotorisch betätigt werden, Hierzu können im Fahrzeugbau übliche Stellmotoren verwendet werden.

Die Luftsteuervorrichtung ist in kompakter Weise in einer Luftverteilbox untergebracht. In dieser erfolgt die Aufteilung des Luftstromes zum hinteren Fußraum und zur B-Säule. Die Luftverteilbox ist wie oben beschrieben angeordnet.

Entsprechend ist jede Fondseite separat durch die Luftsteuervorrichtung steuerbar: So kann jeder der beiden Fondpassagiere sich seine Belüftung im Fuß- und Kopfbereich individuell einstellen.

Im folgenden wird die Erfindung anhand einiger Ausführungsbeispiel beschrieben. Es zeigen:
- Fig. 1: die wesentlichen Teile einer Klima- und Belüftungsanlage in aufgeschnittener, teils vereinfachter Darstellung, mit einem Heizelement im Fondkanal
- Fig. 2: eine Weiterbildung der Fig. 1 in aufgeschnittener, vereinfachter Darstellung mit einem Luftkanal zum Abzweigkanal und
- Fig. 3: eine weitere Weiterbildung der Fig. 1 in aufgeschnittener, vereinfachter. Darstellung mit einer variablen Luftkanalsteuerung von Fondkanal und Abzweigkanal.

Falls nicht ausdrücklich anders gesagt, gilt folgendes für alle Figuren:

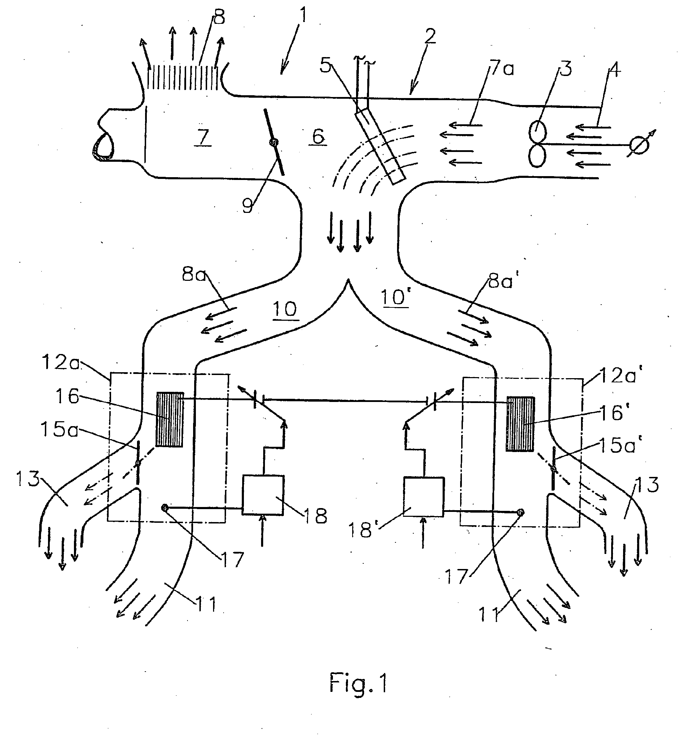

Fig. 1 zeigt eine Klima- und Belüftungsanlage 1 die jedoch nicht beansprucht wird. Diese besteht zunächst aus einem im Bereich der nicht dargestellte; Instrumententafel angeordneten Gehäuse 2.

Das Gehäuse 2 umfaßt ein in der Geschwindigkeit in Stufen oder stufenlos steuerbares Gebläse 3 zum Ansaugen von Frischluft 5a und/oder Umluft 4, ein Klimagerät 5 zum Erwärmen oder Kühlen mindestens eines Teils des angesaugten Luftstromes 4 und einen sich daran anschließenden Luftverteilungsraum 6. An den Luftverteilungsraum 6 schließen sich Front-Luftkanäle an, von denen nur der Kanal 7 dargestellt ist, der zu den Defrosteröffnungen 8 an der nicht dargestellten Frontscheibe führt und durch eine Klappe 9 absperrbar ist.

An der strichpunktierten Steile die Instrumententafel verlassend, führen zwei sehr flache Fond-Luftkanäle 10 und 10' von der nicht dargestellten Mittelkonsole im Boden zum Bereich unter den nicht dargestellten Vordersitzen. Die Luftströme in diesen Fond-Luftkanälen 10 und 10' sind mit 8a und 8a' bezeichnet. Unter jedem Vordersitz ist eine flache Luftverteilbox 12a und 12a' angeordnet. Jede Luftverteilbox 12a und 12a' umfaßt einen Abzweig 13 und 13', der zur jeweiligen B-Säule führt, sowie einen Abzweig 11 und 11', der zum hinteren linken und rechten Fußraum führt. Des weiteren umfaßt in dieser Ausgestaltung jede Luftverteilbox 12a und 12a' eine Drehklappe 15a und 15a', mittels weicher der zur B-Säule führende Abzweig 13 und 13' teils oder ganz absperrbar ist.

Schließlich ist in jeder Luftverteilbox 12a und 12a' eine elektrische Zusatzheizung 16 und 16' mit 250 Watt Leistung angeordnet. Die elektrische Zusatzheizung 16 und 16' wird über einen Fühler 17 und 17' und über ein Stellglied 18 und 18' gesteuert, das in Griffnähe jedes Fondpassagiers angeordnet sein kann. Durch den positiven Temperaturkoeffizienten des Heizleiters wird die elektrische Zusatzheizung sehr schnell aufgeheizt, ohne daß es zu einer Überhitzung oder Überlastung des Bordnetzes kommen kann.

Will man auf eine völlig individuelle Steuerung der Leistung der Zusatzheizung im Fond verzichten, braucht man für den Fond nur eine einzige Zusatzheizung vorzusehen. Diese kann dann zum Beispiel eine Leistung von 500 Watt haben und an der Armaturentafel, siehe strichpunktierte Unterbrechung in der Figur, oder in der Mittelkonsole angeordnet sein, von wo aus die Fondkanäle 10 und 10' dann abzweigen können.

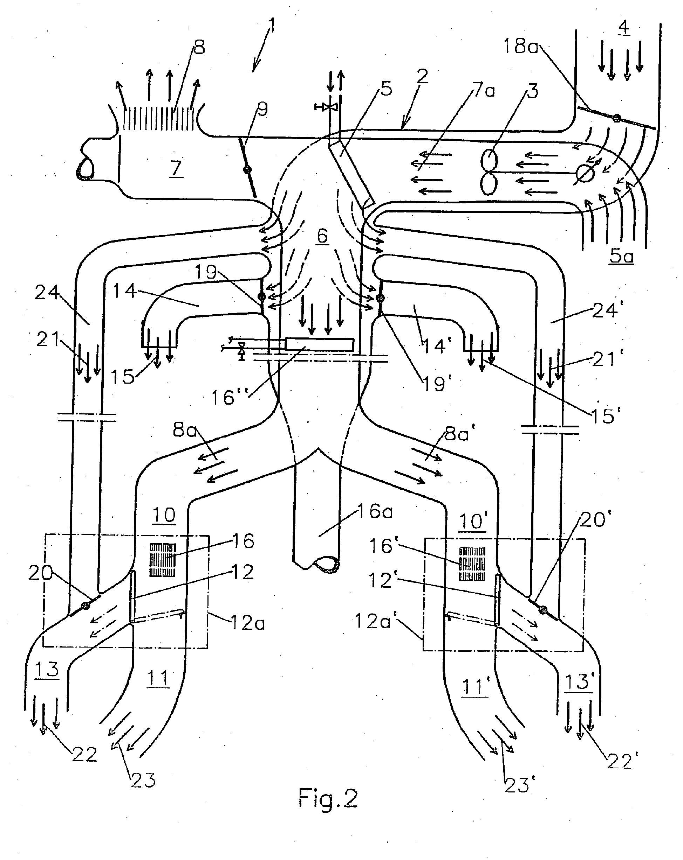

Fig. 2 zeigt eine Klima- und Belüftungsanlage 1 nach dieser Erfindung. Diese besteht aus einem im Bereich der nicht dargestellten Instrumententafel angeordneten Gehäuse 2 und ist analog zu der Beschreibung in Fig. 1 aufgebaut. Abweichend ist hier die elektrische Zusatzheizung 16" vor der Aufspaltung in die Fondkanäle 10 und 10' angeordnet. Optional können die elektrischen Zusatzheizungen 16,16', wie gestrichelt gezeigt in den Fondkanälen 10 und 10' angeordnet sein.

Es soll jedoch ausdrücklich darauf hingewiesen werden, daß für dieser Weiterbildung der Erfindung anstelle einer elektrischen Zusatzheizung auch ein Wärmetauscher stromabwärts vom Klimagerät 5 hinter den Abzweigstellen der Kanäle 24,24'; 14,14' für die vorn Klimagerät 5 kommende Luft 15,15'; 21,21' angeordnet werden kann. Gemäß der Erfindung handelt es sich bei dem Klimagerät 5 ausschließlich um den Verdampfer eines Klimageräts.

An den strichpunktierten Stellen die Instrumententafel verlassend, führen zwei Fond-Luftkanäle 10 und 10' über die Mittelkonsole zum Fond. im Fond teilen sich die Luftkanäle 10 und 10' in Abzweigkanäle 11, 13 und 11', 13'. Während die Kanäle 11 und 11' weiter zum hinteren Fußraum führen und dort austreten, führen die Abzweigkanäle 13 und 13' zu den B-Säulen.

Die folgende Ausführungsform der Erfindung ist nur teilweise in der Figur 2 dargestellt.

Bei der Klima- und Belüftungsanlage 1 für ein Kraftfahrzeug mit einem im Bereich der Instrumententafel angeordneten Gehäuse 2 ist vorgesehen:
- ein Gebläse 3 zum Angaben von Frisch- und/oder Umlauf 4, 5,
- ein Klimagerät 5 zum Erwärmen oder Kühlen mindestens eines Teils des angesaugten Luftstroms 7a,
- eine Luftverteilung Raum 6, von dem aus mindestens ein Frontkanal 7 und mindestens ein Fond-Luftkanal 10, 10', 11,11' abgeht, und
- ggf. Luft steuern Elemente 9, 12, 12' zur Steuerung der Luftmenge in diesen Luft-Kanälen 7, 10, 10'.

Ferner ist vorgesehen, dass der Luftverteilungsraum 6 hinter dem Verdampfer 5 des Klimageräts und vor dem Wärmetauscher 16" geteilt ist und dass zu dem Fond-Luftkanal 10, 10', 11, 11', 13, 13' ein weiterer Luftkanal 24, 24' führt, über den von dem Verdampfer 5 des Klimageräts Kaltluft 21, 21" zugeführt werden kann.

Die Klima- und Belüftungsanlage zeichnet sich dadurch aus, dass der Fond-Luftkanal 10, 10' einen Abzweigkanal 13, 13' aufweist, indem der weitereLuftkanal 24, 24' mündet und dass ein Luftsteuerelement 12, 12' angeordnet ist, mittels dem wahlweise der Abzweigkanal 13, 13" oder der Hauptkanal des Fond-Luftkanals10, 10' teilweise oder ganz absperrbar ist.

Die Klima- und Belüftungsanlage zeichnet sich dadurch aus, dass mindestens zwei Fond-Luftkanäle 10, 10' und entsprechend zwei weitere Luftkanäle 24, 24' für die vom Klimagerät 5 kommende Luft 21, 21' angeordnet sind.

Eine weitere Ausführungsform der Klima- und Belüftungsanlage zeichnet sich dadurch aus, dass die Zuführung der vom Klimagerät 5 kommender Luft 21, 21' über die weiteren Luftkanäle 24, 24' über weitere Luftsteuerelemente 20, 20' erfolgt.

Die Klima- und Belüftungsanlage zeichnet sich dadurch aus, dass der Abzweigkanal 13, 13' zur Belüftung der B-Säule (Luftstrom 22, 22')

Eine weitere Ausführungsform der Klima- und Belüftungsanlage zeichnet sich dadurch aus, dass der weitere Luftkanal 24, 24' von der Instrumententafel her in den Fond zugeführt ist.

Eine weitere Ausführungsform der Klima- und Belüftungsanlage zeichnet sich dadurch aus, dass der weitere Luftkanal 24, 24' als flacher, im Bodenbereich des Kraftfahrzeugs angeordneter Kanal ausgebildet ist.

Die Klima- und Belüftungsanlage zeichnet sich dadurch aus, dass eine Luftsteuervorrichtung 12, 12' vorgesehen ist, mittels der eine variable Aufteilung des Luftstromes 8a, 8a' im Fond-Luftkanal 10, 10' auf den Fußraumauslaß 11, 11' einerseits und auf den B-Säulen-Auslaß 13, 13' andererseits möglich ist.

Eine weitere Ausführungsform der Klima- und Belüftungsanlage zeichnet sich dadurch aus, dass die variable Aufteilung des Luftstromes 8a, 8a1 mindestens nahezu von 0 bis 100% reicht.

Eine weitere Ausführungsform der Klima- und Belüftungsanlage zeichnet sich dadurch aus, dass die Luftsteuervorrichtung 12, 12' in einer Luftverteilbox 12a, 12a' angeordnet ist.

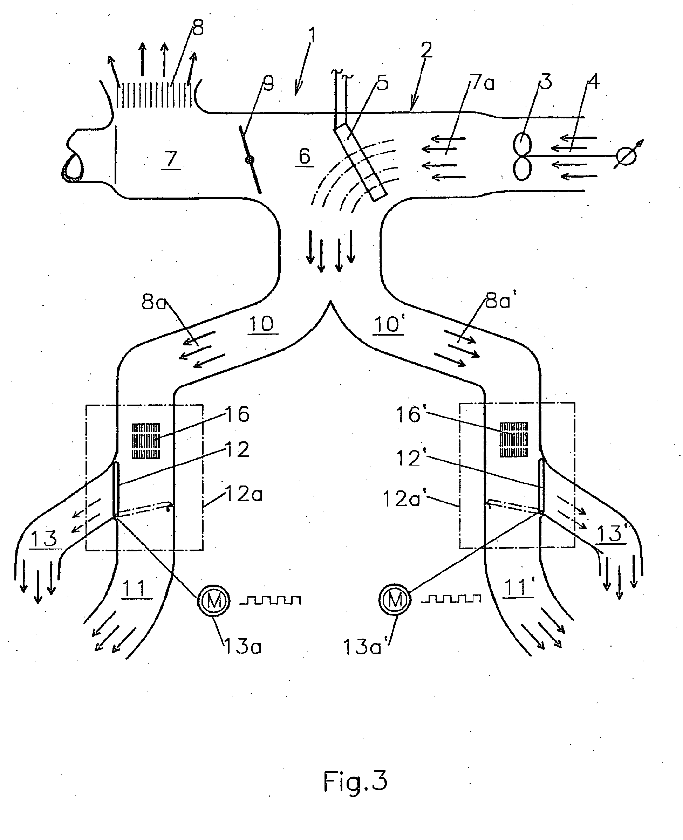

Fig. 3 zeigt eine weitere Klima- und Belüftungsanlage 1 Diese besteht zunächst. aus einem im Bereich der nicht. dargestellten Instrumententafel angeordneten Gehäuse 22 und ist anlog zu der Beschreibung in Fig. 1 aufgebaut.

An der strichpunktierten Stelle die Instrumententafel verlassend, führen zwei Fond-Luftkanäle 10 und 10' zunächst über die Mittelkonsole, dann mit sehr flachem Querschnitt im Boden zum Bereich unter den nicht dargestellten Vordersitzen. Die Luftströme in diesen Fond-Luftkanälen 10 und 10' sind mit 10a und 10a' bezeichnet. Unter jedem Vordersitz ist eine flache Luftverteilbox 12a und 12a' angeordnet. Jede Luftverteilbox 12a und 12a' umfaßt einen Abzweig 13 und 13', der zur jeweiligen B-Säule führt, sowie einen Abzweig 11 und 11', der zum hinteren linken und rechten Fußraum führt und eine dieser Abzweigung vorgeschaltete elektrische Zusatzheizung 16,16'.

Des weiteren umfaßt jede Luftverteilbox 12a und 12a' eine einflügelige Drehklappe 12 und 12', die über einen Elektromotor 13a und 13a verschwenkbar ist. Über nicht dargestellte, im Fond angeordnete Fernschalter kann jeder Elektromotor 13a und 13a' so gesteuert werden, daß jede Drehklappe 12 und 12' verschwenkt werden kann.

Die Verschwenkung kann von der dargestellten Stellung der Drehklappen 12 und 12' - B-Säulen sind ganz abgesperrt, hinterer Fußraum ist voll belüftet - bis zur strichpunktierten Stellung - B-Säulen sind voll belüftet, hinterer Fußraum ist ganz abgesperrt - entweder Stufenlos oder in Stufen vorgenommen werden.

Wenn hingegen auf jeden Fall eine Mindestbelüftung der Abzweige 13, 13' oder 11, 11' gewünscht wird, dann kann z. B. die Verschwenkung der Drehklappen 12 und 12' so begrenzt werden, daß sie nicht ganz schließen. Oder die Drehklappen 12 und 1Z bzw. die abzuschließenden Abzweige 13,13', 11, 11' werden irr Querschnitt so geformt, daß ein völliges Verschließen des offenen Querschnitts durch die Drehklappen 12 und 12' nicht möglich ist. Ein derart gewünschter offener Restquerschnitt könnte z.B. zu einer Restbelüftung von 5 bis 10% führen.

## Patentansprüche

1. Klima- und Belüftungsanlage (1) für ein Kraftfahrzeug mit einem im Bereich einer Instrumententafel angeordneten Gehäuse (2), das umfasst
- ein Gebläse (3) zum Ansaugen von Frisch- und/oder Umluft (4, 5a),
- ein Klimagerät (5) zum Erwärmen oder Kühlen mindestens eines Teils des angesaugten Luftstroms (7a),
- einen Luftverteilungsraum (6), von dem aus mindestens ein Frontkanal (7) und mindestens ein Fond-Luftkanal abgeht,
- Luftsteuerelemente (9, 12, 12') zur Steuerung der Luftmenge in den Luftkanälen (7, 10, 10')vorgesehen sind,
- einen Wärmetauscher (16'),
- wobei der Luftverteilungsraum (6) hinter einem Verdampfer des Klimageräts (5) und vor dem Wärmetauscher (16') geteilt ist,
- von dem Luftverteilungsraum (6) ein erster Fond-Luftkanal (10, 11) und ein zweiter Fond-Luftkanal (10',11') abgeht,
- zu dem ersten Fond-Luftkanal (10, 11 13) ein erster weiterer Luftkanal (24) und zu dem zweiten Fond-Luftkanal (10', 11 13') ein zweiter weiterer Luftkanal (24') führt, über die von dem Verdampfer (5) des Klimageräts Kaltluft (21, 21') zugeführt werden kann, **dadurch gekennzeichnet, dass**
- der erste Fond-Luftkanal (10, 11) einen ersten Abzweigkanal (13) aufweist, in welchem der erste weitere Luftkanal (24) mündet und ein erstes Luftsteuerelement (12) angeordnet ist, mittels dem wahlweise der erste Abzweigkanal (13) oder ein erster Hauptkanal des ersten Fond-Luftkanals (10, 11) teilweise oder ganz absperrbar und eine variable Aufteilung des Luftstromes (8a) im ersten Fond-Luftkanal (10, 11) auf einen ersten Fußraumauslaß (11) einerseits und auf einen ersten B-Säulen-Auslaß (13) andererseits möglich ist,
- der zweite Fond-Luftkanal (10', 11') einen zweiten Abzweigkanal (13') aufweist, in welchem der zweite weitere Luftkanal (24') mündet und dass ein zweites Luftsteuerelement (12') angeordnet ist, mittels dem wahlweise der zweite Abzweigkanal (13') oder ein zweiter Hauptkanal des zweiten Fond-Luftkanals (10', 11') teilweise oder ganz absperrbar und eine variable Aufteilung des Luftstromes (8a') im zweiten Fond-Luftkanal (10', 11') auf einen zweiten Fußraumauslaß (11') einerseits und auf einen zweiten B-Säulen-Auslaß (13') andererseits möglich ist.

2. Klima- und Belüftungsanlage nach Anspruch 1, **dadurch gekennzeichnet, dass** der erste weitere und der zweite weitere Luftkanal (24, 24') von der Instrumententafel her in den Fond zugeführt ist.

3. Klima- und Belüftungsanlage nach einem der vorhergehenden Ansprüche, **dadurch gekennzeichnet, dass** eine Zuführung der vom Klimagerät (5) kommenden Luft (21, 21') über den ersten und zweiten weiteren Luftkanal (24, 24') über weitere Luftsteuerelemente (20, 20') erfolgt.

4. Klima- und Belüftungsanlage nach einem der Ansprüche 1 bis 2, **dadurch gekennzeichnet, dass** die variable Aufteilung des Luftstromes (8a, 8a') nahezu von 0 bis 100% reicht.

5. Klima- und Belüftungsanlage nach einem der vorhergehenden Ansprüche, **dadurch gekennzeichnet, dass** der erste weitere und der zweite weitere Luftkanal (24, 24') als flacher, im Bodenbereich des Kraftfahrzeugs angeordneter Kanal ausgebildet ist.

6. Klima- und Belüftungsanlage nach einem der Ansprüche 1 bis 5, **dadurch gekennzeichnet, dass** die erste Luftsteuervorrichtung (12) in einer Luftverteilbox (12a) und die zweite Luftsteuervorrichtung (12') in einer zweiten Luftverteilbox (12a') angeordnet ist.

## Claims

1. Air-conditioning and ventilation system (1) for a motor vehicle, having a housing (2) arranged in the region of an instrument panel, which housing comprises
- a fan (3) for the induction of fresh and/or recirculated air (4, 5a),
- an air-conditioning unit (5) for heating or cooling at least a part of the inducted air stream (7a),
- an air distribution chamber (6) from which there extends at least one front duct (7) and at least one rear air duct,
- air control elements (9, 12, 12') for controlling the air flow rate in the air ducts (7, 10, 10'),
- a heat exchanger (16'),
- wherein the air distribution chamber (6) splits downstream of an evaporator of the air-conditioning unit (5) and upstream of the heat exchanger (16'),
- a first rear air duct (10, 11) and a second rear air duct (10', 11') extend from the air distribution chamber (6),
- a first further air duct (24) leads to the first rear air duct (10, 11, 13) and a second further air duct (24') leads to the second rear air duct (10', 11', 13'), via which further air ducts cold air (21, 21') can be supplied from the evaporator (5) of the air-conditioning unit,
**characterized in that**
- the first rear air duct (10, 11) has a first branch duct (13) in which the first further air duct (24) opens out and in which there is arranged a first air control element (12) by means of which selectively the first branch duct (13) or a first main duct of the first rear air duct (10, 11) can be partially or completely shut off and variable splitting-up of the air stream (8a) in the first rear air duct (10, 11) between a first footwell outlet (11) on the one hand and a first B-pillar outlet (13) on the other hand is possible,
- the second rear air duct (10', 11') has a second branch duct (13') in which the second further air duct (24') opens out and in which there is arranged a second air control element (12') by means of which selectively the second branch duct (13') or a second main duct of the second rear air duct (10', 11') can be partially or completely shut off and variable splitting-up of the air stream (8a') in the second rear air duct (10', 11') between a second footwell outlet (11') on the one hand and a second B-pillar outlet (13') on the other hand is possible.

2. Air-conditioning and ventilation system according to Claim 1, **characterized in that** the first further and the second further air duct (24, 24') lead into the rear area proceeding from the instrument panel.

3. Air-conditioning and ventilation system according to one of the preceding claims, **characterized in that** the air (21, 21') passing from the air-conditioning unit (5) is supplied via the first and second further air ducts (24, 24') by means of further air control elements (20, 20').

4. Air-conditioning and ventilation system according to one of Claims 1 to 3, **characterized in that** the variable splitting-up of the air stream (8a, 8a') ranges approximately from 0 to 100%.

5. Air-conditioning and ventilation system according to one of the preceding claims, **characterized in that** the first further and the second further air duct (24, 24') are in the form of a flat duct arranged in the floor region of the motor vehicle.

6. Air-conditioning and ventilation system according to one of Claims 1 to 5, **characterized in that** the first air control device (12) is arranged in an air distribution box (12a), and the second air control device (12') is arranged in a second air distribution box (12a').

## Revendications

1. Installation de climatisation et d'aération (1) pour un véhicule automobile, comprenant un boîtier (2) disposé dans une région d'un tableau de bord, lequel boîtier comporte
- un ventilateur (3) pour aspirer de l'air frais et/ou de circulation (4, 5a),
- un appareil de climatisation (5) pour réchauffer ou refroidir au moins une partie du flux d'air aspiré (7a),
- un espace de distribution d'air (8) à partir duquel partent au moins un conduit avant (7) et au moins un conduit d'air arrière,
- des éléments de commande d'air (9, 12, 12') pour la commande de la quantité d'air dans les conduits d'air (7, 10, 10'),
- un échangeur de chaleur (16'),
- l'espace de distribution d'air (6) étant divisé derrière un évaporateur de l'appareil de climatisation (5) ou devant l'échangeur de chaleur (16'),
- un premier conduit d'air arrière (10, 11) et un deuxième conduit d'air arrière (10', 11') partant de l'espace de distribution d'air (6),
- un premier conduit d'air supplémentaire (24) menant jusqu'au premier conduit d'air arrière (10, 11, 13) et un deuxième conduit d'air supplémentaire (24') menant jusqu'au deuxième conduit d'air arrière (10', 11', 13'), par le biais desquels conduits d'air supplémentaires de l'air froid (21, 21') peut être acheminé à partir de l'évaporateur (5) de l'appareil de climatisation,
**caractérisée en ce que**
- le premier conduit d'air arrière (10, 11) comprend un premier conduit de dérivation (13) dans lequel débouche le premier conduit d'air supplémentaire (24) et dans lequel est disposé un premier élément de commande d'air (12) au moyen duquel le premier conduit de dérivation (13) ou un premier conduit principal du premier conduit d'air arrière (10, 11) peut être bloqué partiellement ou entièrement de manière sélective, et une répartition variable du flux d'air (8a) dans le premier conduit d'air arrière (10, 11) entre une première sortie côté espace pour les pieds (11) d'une part et une première sortie côté colonne B (13) d'autre part est possible,
- le deuxième conduit d'air arrière (10', 11') comprend un deuxième conduit de dérivation (13') dans lequel débouche le deuxième conduit d'air supplémentaire (24') et est prévu un deuxième élément de commande d'air (12'), au moyen duquel le deuxième conduit de dérivation (13') ou un deuxième conduit principal du deuxième conduit d'air arrière (10', 11') peut être bloqué partiellement ou entièrement de manière sélective, et une répartition variable du flux d'air (8a') dans le deuxième conduit d'air arrière (10', 11') entre une deuxième sortie côté espace pour les pieds (11') d'une part et une deuxième sortie côté colonne B (13') d'autre part est possible.

2. Installation de climatisation et d'aération selon la revendication 1, **caractérisée en ce que** le premier et le deuxième conduit d'air supplémentaire (24, 24') sont acheminés dans la partie arrière à partir du tableau de bord.

3. Installation de climatisation et d'aération selon l'une quelconque des revendications précédentes, **caractérisée en ce qu'**un acheminement de l'air (21, 21') provenant de l'appareil de climatisation (5) à travers le premier et le deuxième conduit d'air supplémentaire (24, 24') s'effectue par le biais d'éléments de commande d'air supplémentaires (20, 20').

4. Installation de climatisation et d'aération selon l'une quelconque des revendications 1 à 3, **caractérisée en ce que** la répartition variable du flux d'air (8a, 8a') va de presque 0 jusqu'à 100%.

5. Installation de climatisation et d'aération selon l'une quelconque des revendications précédentes, **caractérisée en ce que** le premier et le deuxième conduit d'air supplémentaire (24, 24') sont réalisés sous forme de conduit plat disposé dans la région du plancher du véhicule automobile.

6. Installation de climatisation et d'aération selon l'une quelconque des revendications 1 à 5, **caractérisée en ce que** le premier dispositif de commande d'air (12) est disposé dans une boîte de distribution d'air (12a) et **en ce que** le deuxième dispositif de commande d'air (12') est disposé dans une deuxième boîte de distribution d'air (12a').
